# EUROPEAN PATENT APPLICATION

(11) **EP 1 503 315 A1**
(43) Date of publication of application: **02.02.2005**
(21) Application number: 04016954.2
(22) Date of filing: 19.07.2004
(51) Int. Cl.: G06F 17/60

(54) **Management of changes to objects**

(30) Priority: 22.07.2003 US 623705
(71) Applicant: SAP Aktiengesellschaft, 69190 Walldorf (DE)
(72) Inventor: Schwan, Joerg, 69242 Muehlhausen (DE); Buchmann, Daniel, 76237 Pfinztal (DE); Colle, Renzo, 76437 Rastatt (DE); Mock, Volker, 76872 Freckenfeld (DE); Scholl, Andreas, 69168 Wiesloch (DE)
(74) Representative: Walter, Philipe

(57) **Abstract**

A computer-implemented method for managing a change to a product structure includes defining instructions to implement the change to the product structure, associating a first validity for the change with a first organizational structure, and associating a second validity for the change with a second organizational structure. The first organizational structure has a first organizational view of the product structure, and the second organizational structure has a second organizational view of the product structure. The change is automatically implemented according to the first validity for the first organizational view, and according to the second validity for the second organizational view.

## Description

### TECHNICAL FIELD

This disclosure relates to data processing, and more particularly, to change management in product creation processes.

### BACKGROUND

An important factor in the success of businesses in the current era is the ability to react flexibly to the requirements of the market.

Changes to initial product designs can occur at many points during the product development process. These changes are usually handled through a change management or engineering change management process. Changes to a product design can result from improved technology, changes to consumer demand, changes due to quality problems, and/or changes to materials and components needed for manufacturing. Change management can be used to control changes to products, including assemblies and sub-assemblies, components and parts, raw materials, processes and sub-processes, product information and process information.

Requests for change can be transmitted from different entities influential in and affected by the product creation process. The different entities involved in the product creation system can include internal and external entities. For example, internal entities can include design, purchasing, marketing and sales, manufacturing, installation, customer service, and technical services. External entities can include existing and potential customers, dealers, distributors, suppliers, vendors, and regulatory organizations. The requests can be evaluated for consistency, dependence on other parameters, and the date they are to become valid. If a change is successfully evaluated, activities associated with the change and the resulting consequences can be documented, and notification of the change is sent to the various entities in the product creation process.

### SUMMARY

Methods and apparatuses, including computer program products, are disclosed for managing changes in a product creation process.

In one general aspect, a computer-implemented method for managing a change to a product structure includes defining instructions to implement the change to the product structure, associating a first validity for the change with a first organizational structure, and associating a second validity for the change with a second organizational structure. The first organizational structure has a first organizational view of the product structure, and the second organizational structure has a second organizational view of the product structure. The change is automatically implemented according to the first validity for the first organizational view, and according to the second validity for the second organizational view.

In another general aspect, a computer program product, tangibly stored on a machine readable medium, for managing a change of a product structure includes instructions for causing a processor to define instructions to implement the change of the product structure, associate a first validity for the change with a first organizational structure, associate a second validity for the change with a second organizational structure, and automatically implement the change according to the first validity for the first validity for the first organizational view, and according to the second validity for the second organizational view. The first organizational structure has a first organizational view of the product structure, and the second organizational structure has a second organizational view of the product structure.

Implementations of the computer program product may include one or more of the following features. For example, defining instructions to implement the change of the product structure may include defining instructions to change a plurality of different objects of the product structure. At least one of the first and second validities may depend on a date. At least one of the first and second validities may be valid beginning with a first date and ending with a second date. The first and second organizational structures may include a hierarchy of organizational structures and the second validity may depend on the first validity. At least one of the first and second validities may depend on attaining a production milestone. At least one of the first and second validities may depend on implementing a different change to the product structure. A previous validity may be associated with the change and defining instructions to implement the change may include defining instructions for modifying the previous validity. The change may include previous instructions for changing the product structure and defining instructions to implement the change may include defining instructions for modifying the previous instructions. The first validity may precede the second validity. The second validity may depend upon the first validity and may be contemporaneous with the first validity.

The method and/or implementations of the computer program may further include storing in a first database the instructions to implement the change to the product structure, the first validity, and the second validity, whereas the product structure is stored in a second database, and the second database is separate from the first database. The method may also further include receiving a request to make a change to a product structure. The method may include determining whether the change should be implemented, generating a change order to implement the change, where the change order includes the instructions to implement the change of the product structure, the first validity, the second validity, and a name of a user who determined that the requested change should be implemented, and storing the change order in a first database, wherein the product structure is stored in a second database, and the second database is separate from the first database.

### BRIEF DESCRIPTION OF DRAWINGS

FIG. 1 is a block diagram of a product creation system.
FIG. 2 is a block diagram of a product record in a product creation system.
FIG. 3 is a block diagram of linked product objects in a product creation system.
FIG. 4 is a block diagram of a change order used in a product creation system.
FIG. 5 is a schematic diagram of hierarchically organized change orders in a product creation system.
FIG. 6 is a flow chart of a change management process for changing one or more product objects in a product creation system.

Like reference numbers and designations in the various drawings indicate like elements.

### DETAILED DESCRIPTION

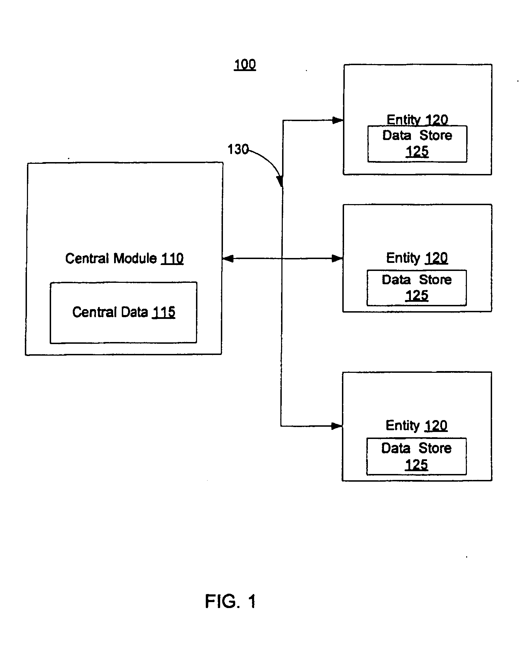

As shown in FIG. 1, a change management system can be implemented in a product creation system 100. The product creation system 100 includes a central module 110 and entity modules 120. Each of the modules 110, 120 includes a data store 115, 125.

The central module 110 represents a centralized control for a product creation process. The entity modules 120 represent entities involved in the product creation process. Many entities may participate in the development of a product.

The entities can include internal and external entities. For example, entity modules 120 can include modules for design, purchasing, marketing, sales, manufacturing, installation, customer service, technical services, customers, dealers, distributors, suppliers, vendors, and regulatory organizations. The central module 110 and the entity modules 120 can communicate through a network 130.

The central module 110 includes a central data store 115 that stores central data for a product creation process. The central data can be accessed by the entity modules 120, based on permissions, or transmitted to the entity modules 120 through a network 130. Each of the entity modules 120 includes a data store 125 for storing the data received from the central module 110 and for additional entity specific data developed in a respective entity module 120. For example, if the entity module 120 is a marketing module, the corresponding data store 125 could store marketing specific information.
The entity specific data can be transmitted to the central data store 115, or the entity specific data can be stored only in data store 125.

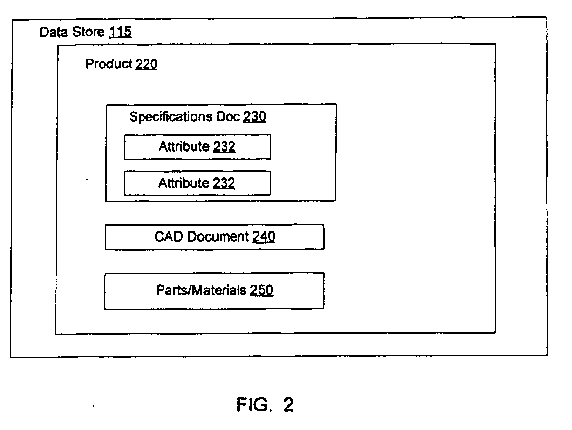

Data for the product creation system 100 can be stored in records in the data stores 115, 125. The data include objects associated with the product creation process. The objects can include product classes, attributes, product line designs, parts lists, materials lists, routings, etc. The objects can be organized in the data store 115, 125 and related to products, product lines, classes of products, etc., as described below with reference to FIG. 2.

Different entity modules 120 can develop objects of the product creation system in parallel with each other. Each entity module 120 may develop different versions of each object of the product creation process.

FIG. 2 is a block diagram illustrating a product structure 220 stored in a data store 115, 125. The product associated with the product structure 220 can include a specific product (e.g., a car) or a component of a product (e.g., a tire). Product structure 220 can include all objects associated with the product creation system 100 for a product. For example, the product structure 220 can include a variety of documents, such as a specification document 230, a computer aided design ("CAD") document 240 and a Parts/Materials document 250.

The specification document 230 can include attribute records 232. Each attribute record 232 can contain information about an attribute associated with the product. Attributes can include component information such as engine type (e.g., 95 HP, 110 HP, 125 HP, etc.) or brake type (e.g., disc or drum), or characteristics such as body color (e.g., black, silver, red, etc.) or fuel efficiency (e.g., 25 m.p.g.). Each attribute record 232 can include a value for each attribute. For example, if the attribute record 232 stores information for the attribute "engine power," the information stored in attribute record 232 can include a value of "110 HP." The contents of the attribute record(s) may be changed from within central module 110 or by any entity module 120.

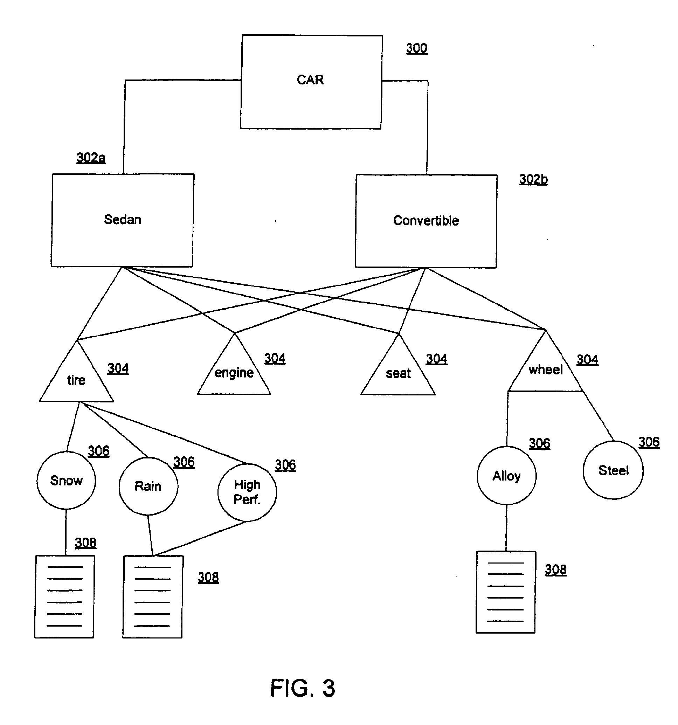

Referring to FIG. 3, a product structure 220 may be linked to other related product structures 220 in a hierarchy. A product structure 220 may be used to describe anything from the very complex product (e.g, a car) to the very simple component (e.g, a screw). For example, a basic product structure 220 may represent a car 300. The product structure 220 describing the basic product 300 may be linked to one or more product classes 302 (e.g., a sedan 302a or a convertible 302b). A basic product 300 or product class 302 may be composed of several functional structures 304 (e.g., a wheel, a tire, an engine, a piston, a seat), and the functional structures 304 may be made up of basic parts and materials or characteristics 306 (e.g, a steel wheel, an alloy wheel, a rain tire, a high-performance tire, a snow tire). Documentation 308 (e.g., a CAD drawing, a bill of materials, a specifications sheet) may be associated with products 302, functional structures 304, and materials 306.

Within an organization, people within different departments of the organization may need different information about a product. Thus, several different views 310 of a product structure 220 may be provided, which are appropriate for different users of the product structure data. For example, the data describing the car 300 may be provided to a design team, an engineering team, a production team, and a sales team, but each team may use different portions of the data. Thus, considering the functional structure 304 of a wheel: the design team needs to know about the shape of the wheel and other products with which the wheel fits together and interacts; the engineering team needs to know about the size of the wheel, the loads it must bear, and the materials of which it is made; the production team needs to know what parts available on the factor floor are used to produce the wheel; and the sales team needs to know about the cost of wheel options and the appearance of the wheel. To provide only necessary and useful information to different components of the organization, different data may be selected from all the available data about the wheel and presented appropriately in different views to the various different teams.

The product structure hierarchies of FIG. 3 provide a static representation of a product and all of its components. However, a product evolves during its lifecycle and experiences many changes. Because the data structures specifying a product are so large, complex, interrelated, and interdependent, and because very many different users can have access to a product specification and its development, managing changes to a product specification is a non-trivial task.

Although the product structures 220 have been described with reference to a physical object, product structures 220 may also include other object types, such as, for example processes for a service business. For example, a basic product structure 300 may represent a customer service interaction, which may be linked to one or more product classes 302 (e.g., a call center interaction or a automated website interaction. Product classes 302 may be composed of several functional structures 304 (e.g., receiving a complaint from a customer, providing the customer with a rebate, providing the customer with a predetermined solution), which may be linked to different characteristics 306 and documentation 308.

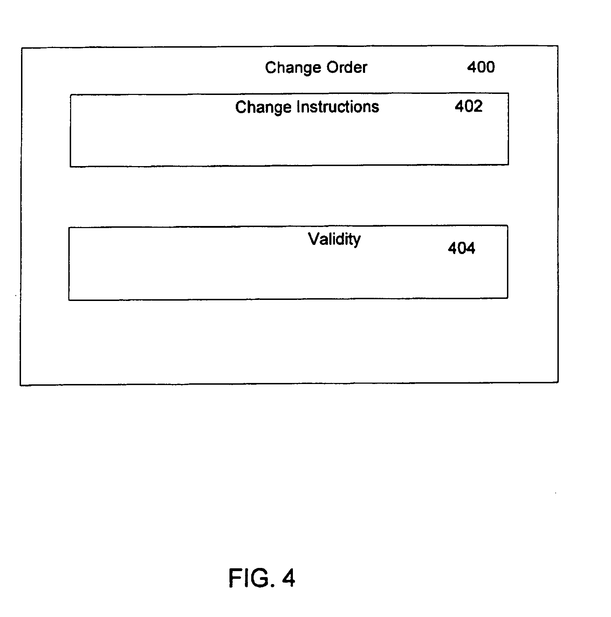

Referring to FIG. 4, a change order 400 for managing a change to a product structure 220 contains instructions for changing or updating a product structure 220. A change order 400 can contain instructions 402 for altering one or more data records associated with a product structure 220. A single change order 400 can also affect several interrelated product structures 220. For example, if a change order 400 requires that the heat tolerance of a wheel be increased by 40 degrees, several changes may be required including: a change in the materials used to cast the wheel; a change in the molds and procedures used to cast the wheel; a change in the lug nuts used to fasten the wheel to the axle; a change in the recommended torque for fastening the lug nuts, etc.

A change order 400 may also contain a "validity" 404. The validity 404 of a change order 400 determines if a specified change order 400 is allowed and when the instructions 402 specified by the change order 400 are to be implemented for the product structure(s) 220 it affects. Thus, the validity 404 determines if the change is allowable and, if so, when it becomes effective. The validity 404 may be specified in terms of a time or date or in terms of another parameter (e.g., a particular serial number, or a particular customer). The validity 404 may be open-ended (e.g, after it becomes valid, it stays valid) or it may be restricted (e.g., for a particular time period). The validity 404 associated with a change order 400 may be, for example, a Boolean variable that is TRUE when certain conditions are met and that is FALSE when those conditions are not met.

By using the interrelationships between different product structures 220, a system 100 receiving a change order 400 may determine the feasibility of the requested change for the specified validity 404. For instance, a requested change may be feasible only when accompanied by a dependent change that is valid at the time of the validity 404 of the requested change. While a change order 400 itself cannot determine if a particular change is technically feasible, the change order 400 can determine automatically the states for product structures 220 that can interact feasibly when the changes are described by change orders 400 and their validities 404. For example, a wheel designed originally to be made of steel might be modified to be made of rubber rather than steel. Whereas a steel wheel may require axle type A, a rubber wheel may require axle type B. Therefore, a change in the wheel design from steel to rubber would require a corresponding change from axle type A to axle type B. For this to occur, the validity 404 of the change in the wheel design must be effective at the same time as the validity 404 of the change in the axle type is valid. By tracking the modifications to the wheel design using a change order 400, at the time the change order 400 is evaluated, changes that allow different product structures 220 to properly interact are automatically found. The validity 404 of change orders 400 permits a modification to a product structure 220 to be implemented timely so that the modification can properly interact with its interrelated product structures.

When a change order 400 contains instructions 402 for ordering a change that affects multiple product structures 220, the change order can require that multiple different validities 404 be applied to the multiple different product structures 220 affected by the change order 400, or it can require that multiple different validities 404 be applied for different users accessing and viewing the product structure 220. For example, a change order 400 might require a new brake design for a car. When implementing the new brake design for the design and engineering departments of an organization, the change order 400 is immediately valid; for the purchasing department responsible for purchasing the parts to make the brake, the change order 400 is valid only after the engineering specifications for the new design have been finalized; whereas for the production department of the organization, the change order 400 is valid only after the new parts have arrived on the production floor or only after a certain serial number of car is begun on the production floor.

Thus, the validity 404 of a change order 400 is not attached absolutely to a particular product structure 220 or data structure. Rather, the validity 404 of a change order 400 may depend on the user viewing the particular product structure 220. If a change order 400 requiring a new brake design is implemented and requires new parts, CAD drawings, materials, manufacturing processes, these new parts, drawings, materials, and processes may become valid to different people at different times depending on their view of the new brake design. Moreover, the validity 404 of a change order 400 for different organizational departments may be related, such that the validity 404 of a change order 400 for one department depends on factors other than time, such as the attainment of a milestone by another department (e.g., completion of a design and/or quality control process, a budget approval, a production target, etc.). In this manner, a change order 400 can be specified and first become valid "upstream" in the production (e.g., in the design or engineering department). Then, after the change order instructions 402 have been implemented by the upstream department (e.g., an engineering design receives approval), they can be "released" to a "midstream" department (e.g., a production department) and become immediately valid for the midstream department. After the midstream department achieves a milestone (e.g., completion of a prototype) or after some other triggering event (e.g., a press release announcing the change), the change order instructions 402 can be released to a downstream department (e.g., a sales and marketing department) where they may become valid upon product shipment, for instance.

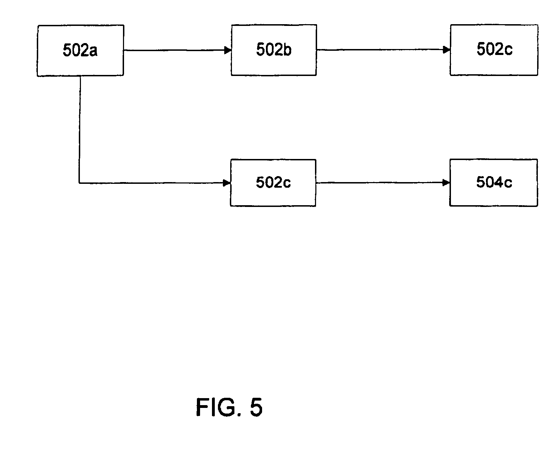

In this manner, the validity 404 of a change order 400 is not based on an implicit time axis. Rather, as shown in FIG. 5, change orders 400 are stored in a kind of chain structure and various change orders 400 may be represented by change order links 502a-c, 504b-c of the structure chain, where the validity 404 of one change order 400 can depend on the validity 404 of one or more other change orders 400. For example, a multi-component change order 400 to implement a new kind of disk brake in a car may be specified by the chain structure in FIG. 5. A change order link 502a may be applied to re-design the disk brake, and this change order may be executed by the design department of the organization. Change order link 502a may become valid on a particular day, and may remain valid for the duration of a model year of the car. When the change order link 502a has been completed by the design department, change order link 502b may be released to the production department to specify the new components that are necessary to build the newly-designed disk brake. The completion of change order link 502a by the design department can trigger the activation of change order link 502b to the production department. Similarly, a change order link 504b specifying a different recommended tire for the car as a result of the change in the brake design specified by the change order link 502a. Finally, after a car with a particular serial number has been completed with the newly designed brakes and tires by the production department, change order links 502c and 504c may be released to the marketing department, so that the marketing department becomes aware of, and can begin marketing, cars having the new brake design and tires. Therefore, as shown in FIG. 5, the validity 404 of different change orders 400 may depend on various factors, including a designated date, the completion of a previous change order 400, the attainment of a designated serial number in a production run, etc. Moreover, a change to a particular product structure 220 (e.g., a brake or a tire) may have different validities 404 for different departments of an organization. For example, the marketing department may not become aware of a change to a product structure 220 until after the design department has completed a change to the design of the product structure 220. Thus, from the user's point of view, the change process is simplified and streamlined in that changes are implemented semi-automatically and are presented to particular users only when the users need to know about the changes.

The implementation of each separate change order 400 to a data object alters the data object to a new "change state," or state of the data object during the development or lifecycle of the product. Thus, the chain structure hierarchy of change order links 502a-c, 504b-c may be used to trace the history of the change state of a data object during the development process, such that a historical change state of a product can be evaluated and located. A change state of a data object may be accessed by reference to the change link 502a-c, 504b-c that created the change state or by reference to a validity 404 that created the change state of the data object (e.g., a date). The validity 404 may be a complex validity 404 (e.g., before certain date and after a certain date, when disc brakes were used).

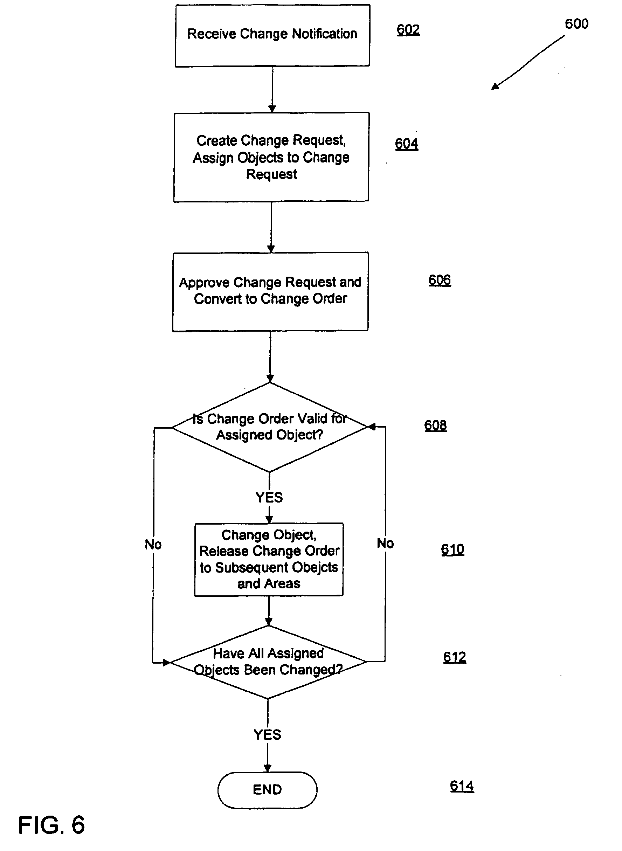

Referring to FIG. 6, a process 600 for implementing a change in a product structure 220 begins with the receipt of a change notification (step 602). The change notification may originate within the organization that produces the product or may originate with a customer or vendor of the organization. After receipt of the change notification, a change request is generated (step 604). The change request identifies the objects of the product structure(s) 220 that would be affected by the change and when, or under what conditions, the change would occur. The change request also identifies the people who originated the change notification and the change request. After the change request has been generated, the change request is reviewed to determine if the requested change should be implemented or if it should be implemented in a modified form (step 606). After the intended change has been reviewed and approved, it is converted to a change order 400 (step 606). A change order 400 contains information for controlling and executing the change process that affects one or more objects and one or more views of the object(s). Such information for controlling and executing a change to a data object may be known as a change task. A change order 400 may contain several change tasks, each of which may operate to change different data objects or which may contains a different validities 404 for the changes to be made to different data objects. A change task also stores the name(s) of the person or people whose order specified the change, so that the change is completely traceable.

An organization can have multiple different subunits or departments (e.g., a production department, a design department, a sales department, a purchasing department, and a marketing department), each of which is affected differently by a change order 400. Thus, a change order 400 can be executed in and have a different effect in different contexts. Therefore, different subunits or departments of an organization may give rise to a "context" to guide the change process. Contexts can be organized in a hierarchy. The hierarchy of contexts can be used to ensure that changes to data object are processed in a particular order, and that changes to an data object state in one context cannot be executed in one context until after they have been executed in a predecessor context (e.g., changes to a disk brake object are not performed in the marketing department's context, until after they have been processed in the design context and in the production context).

Whether downstream change tasks are triggered automatically or not can depend on a "change type," which is assigned to a change order 400 when the change order 400 is created. The change type determines: whether a change task is triggered automatically or manually; and whether an object management record is created automatically or manually. When the change task and the object management record are both triggered automatically, no user control is used during the change process. When the change task and the object management record are both triggered manually, control of the change process can be limited to a specified user, who is allowed to change a certain object. Object management records allow control of the change process to be implemented at the change order level or the change task level. Implementing the change at the change order level means that any user owning access to a change task in this order may change the object(s) affected by the change order 400. Implementing the change at change task level means that only the user who owns access to the particular change task is allowed to change the object.

As mentioned above, the concept of a context encompasses an organizational unit. Furthermore, a context may be characterized chronologically by a "phase." A phase is associated with different periods in the lifecycle of a product. While an organizational unit refers to different parts of an organizational structure, a phase is associated with different periods in the lifecycle of a product, and together they may form a context. For example, a product may exist in a planning or design phase, a prototype phase, an engineering phase, a production phase, or a supported-but-not-longer-produced phase. Different data object states can be assigned to different phases of a product lifecycle, and when a new phase of the product lifecycle is reached, the relevant data object states may become valid automatically and processed in a change step. Thus, the phase is an element of a context, in that the combination of the knowing where and for what purpose data are implemented defines a context.

Multiple change order types are permissible, including a normal change order 400 that affects one or more objects and assigns a validity 404 to the change order 400 affecting the object(s), a change order 400 that affects only the validity 404 of a previously specified change to an object, or a change order 400 that alters a previously specified change order 400 but that does not affect the validity 404 of the existing change order 400. A "validity change order" is used to attach a validity 404 to an object without making any changes to the objects affected by the change order 400. Thus, if a change order 400 has previously been specified, a validity change order replaces the validity 404 of the previously specified change order 400 by the validity 404 of the validity change order. This is important if some changes are linked together but some of the changes must be implemented at an earlier time than others (e.g., a change to the cylinder of a motor affects the motor design as well, so a single change order 400 is used for both changes, but the manufacturing of the cylinder has to start earlier than the assembly of the motor). A "correction change order" is used to change several objects while maintaining the validity 404 that had been assigned previously to the changes of the objects. For all of the change orders 400, the previous validity 404 is kept, and all the changes are gathered in a single change order 400.

Change orders 400, including information concerning the changes they are to implement, the objects to which they apply, and the validities 404 of the change orders 400, are stored in a change management database. Thus, the change orders 400 and the information they contain are stored independently of the objects of the products they affect.

After a change order 400 has been generated, it is applied to the object(s) it affects. For each object affected by a change order 400, a determination is made whether the change order 400 is valid for the object (step 608). If the change order 400 is valid for the object, the object is changed and the change order 400 is released to subsequent objects (step 610). If all the objects to be affected by the change order 400 have been changed (step 612), the change order process terminates (step 614). Otherwise, the process continues to evaluate whether the change order 400 of other assigned objects is valid (step 608) and to execute changes on objects for which the change order 400 is valid.

The invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks such as internal hard disks and removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device such as a CRT (cathode ray tube) or LCD (liquid crystal display) monitor for displaying information to the user and a keyboard and a pointing device such as a mouse or a trackball by which the user can provide input to the computer. Other kinds of devices can be used to provide for interaction with a user as well; for example, feedback provided to the user can be any form of sensory feedback, such as visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or an Web browser through which a user can interact with an implementation of the invention, or any combination of such back-end, middleware, or front-end components. The components of the system can be interconnected by any form or medium of digital data communication, e.g., a communication network. Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention. Accordingly, other embodiments are within the scope of the following claims.

## Claims

1. A computer-implemented method for managing a change to a product structure comprising:
defining instructions to implement the change to the product structure;
associating a first validity for the change with a first organizational structure, the first organizational structure having a first organizational view of the product structure;
associating a second validity for the change with a second organizational structure, the second organizational structure having a second organizational view of the product structure; and
automatically implementing the change according to the first validity for the first organizational view, and according to the second validity for the second organizational view.

2. The method of claim 1, wherein defining instructions to implement the change of the product structure includes defining instructions to change a plurality of different objects of the product structure.

3. The method of claim 1 or 2, wherein at least one of the first and second validities depends on a date.

4. The method of any one of claims 1 to 3, wherein at least one of the first and second validities is valid beginning with a first date and ending with a second date.

5. The method of any one of claims 1 to 4, wherein the first and second organizational structures comprise a hierarchy of organizational structures and wherein the second validity depends on the first validity.

6. The method of any one of claims 1 to 5, wherein at least one of the first and second validities depends on attaining a production milestone.

7. The method of any one of claims 1 to 6, wherein at least one of the first and second validities depends on implementing a different change to the product structure.

8. The method of any one of claims 1 to 7, wherein a previous validity is associated with the change and wherein defining instructions to implement the change includes defining instructions for modifying the previous validity.

9. The method of any one of claims 1 to 8, wherein the change includes previous instructions for changing the product structure and wherein defining instructions to implement the change includes defining instructions for modifying the previous instructions.

10. The method of any one of claims 1 to 9, wherein the first validity precedes the second validity.

11. The method of any one of claims 1 to 10, wherein the second validity is dependent upon the first validity and contemporaneous with the first validity.

12. The method of any one of claims 1 to 11, further comprising storing the instructions to implement the change to the product structure, the first validity, and the second validity in a first database, wherein the product structure is stored in a second database, the second database being separate from the first database.

13. The method of any one of claims 1 to 12, further comprising receiving a request to make a change to a product structure.

14. The method of claim 13, further comprising:
determining whether the change should be implemented;
generating a change order to implement the change, the change order including the instructions to implement the change of the product structure, the first validity, the second validity, and a name of a user who determined that the requested change should be implemented; and
storing the change order in a first database, wherein the product structure is stored in a second database, the second database being separate from the first database.

15. A computer program product, tangibly stored on a machine readable medium, for managing a change of a product structure, in particular according to a method of any one of claims 1 to 14, the computer program product comprising instructions for causing a processor to:
define instructions to implement the change of the product structure;
associate a first validity for the change with a first organizational structure, the first organizational structure having a first organizational view of the product structure;
associate a second validity for the change with a second organizational structure, the second organizational structure having a second organizational view of the product structure; and
automatically implement the change according to the first validity for the first validity for the first organizational view, and according to the second validity for the second organizational view.

16. The computer program product of claim 15, further comprising instructions for causing the processor to receive a request to make a change to a product structure.

17. The computer program product of claim 16, further comprising instructions for causing the processor to:
receive a user-defined determination of whether the change should be implemented;
generate a change order to implement the change, the change order including the instructions to implement the change of the product structure, the first validity, the second validity, and a name of a user who determined that the requested change should be implemented; and
store the change order in a first database, wherein the product structure is stored in a second database, the second database being separate from the first database.
